# EUROPÄISCHE PATENTSCHRIFT

(11) **EP 0 339 205 B1**
(45) Veröffentlichungstag und Bekanntmachung des Hinweises auf die Patenterteilung: **27.01.1993**
(21) Anmeldenummer: 89103315.1
(22) Anmeldetag: 24.02.1989
(51) Int. Cl.: B01F 3/04, B01F 15/00

(54) **Gülle/Jauche-Rührbelüfter**
Liquid manure stirrer-aerator
Agitateur-aérateur de purin

(30) Priorität: 29.04.1988 DE 3814649
(43) Veröffentlichungstag der Anmeldung: 02.11.1989
(73) Patentinhaber: Purkathofer, Harald, 6800 Feldkirch (AT)
(72) Erfinder: Purkathofer, Harald, 6800 Feldkirch (AT)
(74) Vertreter: WILHELMS, KILIAN & PARTNER Patentanwälte

(56) Entgegenhaltungen:
- DE-A- 2 823 515
- DE-A- 3 427 584
- FR-A- 2 248 078

## Beschreibung

Die Erfindung betrifft eine Rührvorrichtung zum Durchmischen und Belüften von Gülle oder Jauche mit einem Strömungsleitrohr, das koaxial einen drehbaren Rührer umgibt.

Eine derartige Rührvorrichtung mit propellerartiger Ausbildung des Rührers, die aus der FR-A-2.248.078 bekannt ist, erzeugt eine axiale Strömung und bewirkt eine Durchmischung des gesamten Inhaltes eines Gülle- oder Jauchebehälters, in dem die Rührvorrichtung eingesetzt wird.

Der Nachteil einer propellerartigen Ausbildung des Rührers besteht jedoch darin, daß im Betrieb Pflanzenfasern oder dergleichen sich um den propellerartig ausgebildeten Rührer wickeln, was zumindest mit einem höheren Energieverbrauch beim Betrieb der Rührvorrichtung verbunden ist und im Extremfall zu einem Festfressen des Rührers führen kann.

Aus der DE-A-3.427.584 ist eine weitere Rührvorrichtung zum Durchmischen von Gülle und Jauche bekannt, bei der der Rührer in Form einer Rührschaufel ausgebildet ist. Die schaufelartige Ausbildung des Rührers hat gegenüber der propellerartigen Ausbildung den Vorteil, daß im Betrieb Pflanzenfasern und dergleichen abgleiten und eine derartige Rührvorrichtung somit wickelfrei ist. Die aus der DE-OS 3 427 584 bekannte Rührvorrichtung mit schaufelartiger Ausbildung des Rührers bewirkt jedoch keine axiale Strömung in der zu behandelnden Gülle oder Jauche, da sie das behandelnde Medium zwar axial ansaugt, jedoch mit der Rührschaufel lediglich radial nach außen gegen die Wand eines Hüllrohrers schleudert. Diese Rührvorrichtung hat daher nur einen örtlich begrenzten Effekt, so daß bei großen Gülle- oder Jauchebehältern ein häufiger Standortwechsel notwendig ist, um den gesamten Behälterinhalt durchmischen zu können.

Die der Erfindung zugrundeliegende Aufgabe besteht daher darin, die bekannte Rührvorrichtung gemäß FR-A-2-248. 078 so auszubilden, daß sie wickelfrei arbeitet.

Diese Aufgabe wird gemäß der Erfindung durch die Ausbildung gelöst, die im kennzeichnenden Teil des Patentanspruchs 1 angegeben ist.

Die bei der erfindungsgemäßen Rührvorrichtung vorgesehene Rührschaufel hat aufgrund ihrer Ausbildung mit Abwinklungen eine Form, die dem Kopf eines Spiralbohrers entspricht, der das zu behandelnde Medium ansaugt und in einer axialen Strömung im Strömungsleitrohr nach hinten führt.

Wenn die erfindungsgemäße Rührvorrichtung in ein Gülle- oder Jauchebad eingesetzt wird, wird bei drehender Rührschaufel eine axiale Strömung des behandelten Mediums bewirkt, die beispielsweise bei einem vertikalen Einsatz der Rührvorrichtung von unten nach oben verläuft und im Laufe der Zeit zu einem Kreislauf führt, der nach und nach das gesamte Gülle- oder Jauchevolumen einbezieht. Dabei arbeitet die erfindungsgemäße Rührvorrichtung aufgrund der schaufelartigen Ausbildung des Rührers wickelfrei.

Besonders bevorzugte Ausgestaltungen und Weiterbildungen der erfindungsgemäßen Rührvorrichtung sind Gegenstand der Patentansprüche 2 bis 4.

Die Abschrägung des vorderen Endes des Strömungsleitrohres gemäß Anspruch 3 hat insbesondere den Vorteil, daß beim Aufsetzen des Leitrohres auf den Behälterboden ein ausreichender Ansaugquerschnitt bleibt.

Im folgenden wird anhand der zugehörigen Zeichnung ein besonders bevorzugtes Ausführungsbeispiel der Erfindung näher beschrieben. Es zeigen
Fig. 1 eine teilweise geschnittene Seitenansicht des Ausführungsbeispiels der erfindungsgemäßen Rührvorrichtung in ihrem in ein Gülle- oder Jauchebad eingesetzten Zustand,
Fig. 2 eine Seitenansicht, eine Draufsicht und eine Querschnittsansicht des Rührers bei dem in Fig. 1 dargestellten Ausführungsbeispiel der erfindungsgemäßen Rührvorrichtung und
Fig. 3 das Strömungsleitrohr mit Halteeinrichtung für die Rührerhohlwelle bei dem in Fig. 1 dargestellten Ausführungsbeispiel der erfindungsgemäßen Rührvorrichtung mehr im einzelnen.

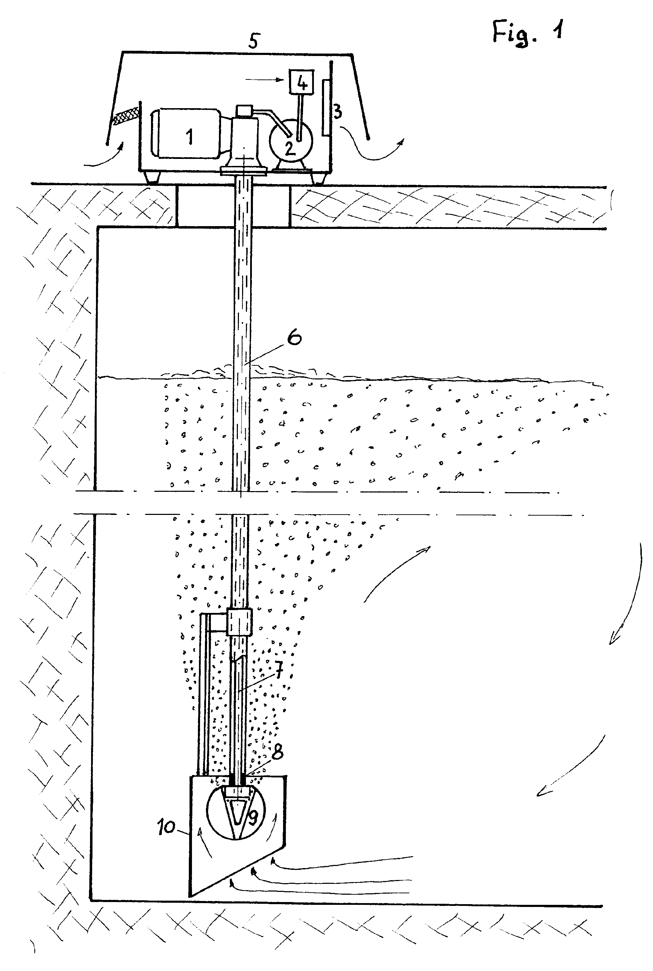

In Fig. 1 ist eine schematische Seitenansicht eines Ausführungsbeispiels der erfindungsgemäßen Rührvorrichtung, d.h. eines Gülle/Jauche-Rührbelüfters zum Durchmischen und Belüften von Gülle, d.h. im wesentlichen Flüssigmist sowie auch von Jauche, d.h. im wesentlichen vorwiegend Harn dargestellt.

Wie es in Fig. 1 dargestellt ist, sind ein Getriebemotor 1, ein Luftverdichter 2 mit Filter 4 und ein Kühlventilator 3 innerhalb eines wetterfesten Gehäuses 5 untergebracht.

An der Unterseite des Gehäuses 5 ist ein Führungsrohr 6 befestigt, welches gemeinsam mit einer als Hohlwelle aufgebildeten Rührschaufelwelle 7 der Tiefe des jeweiligen Gülle- oder Jauchebehälters angepaßt ist.

Die Hohlwelle 7 wird durch mehrere Gleitlager 8 geführt und dreht am unteren Ende einen zur Abweisung von Feststoffen speziell geformten Rührer 9 mit Luftaustrittsöffnungen.

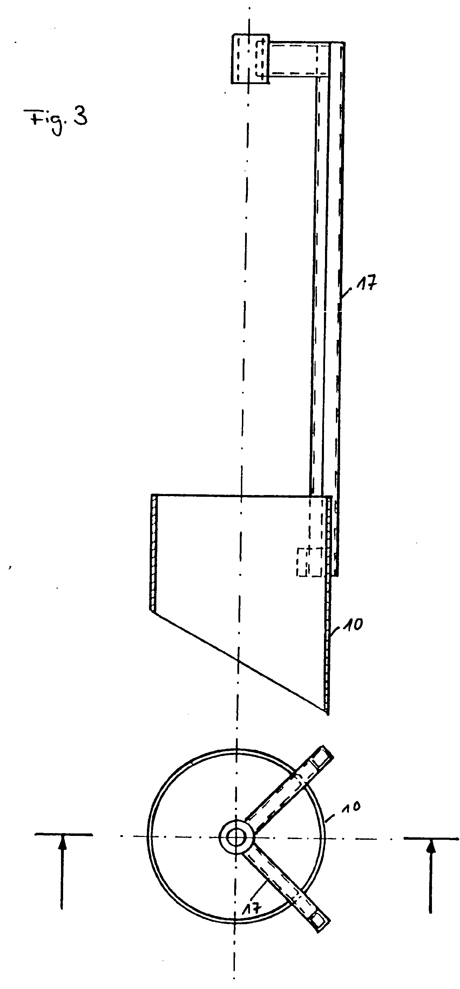

Der Rührer 9 befindet sich innerhalb eines ihn koaxial umgebenden Strömungsleitrohres 10, das keinerlei Querschnittsverengungen, beispielsweise durch interne Streben aufweist. Das Strömungsleitrohr 10 ist über eine Halterung 11 am Führungsrohr 6 angebracht, die mehr im einzelnen in Fig. 3 dargestellt ist.

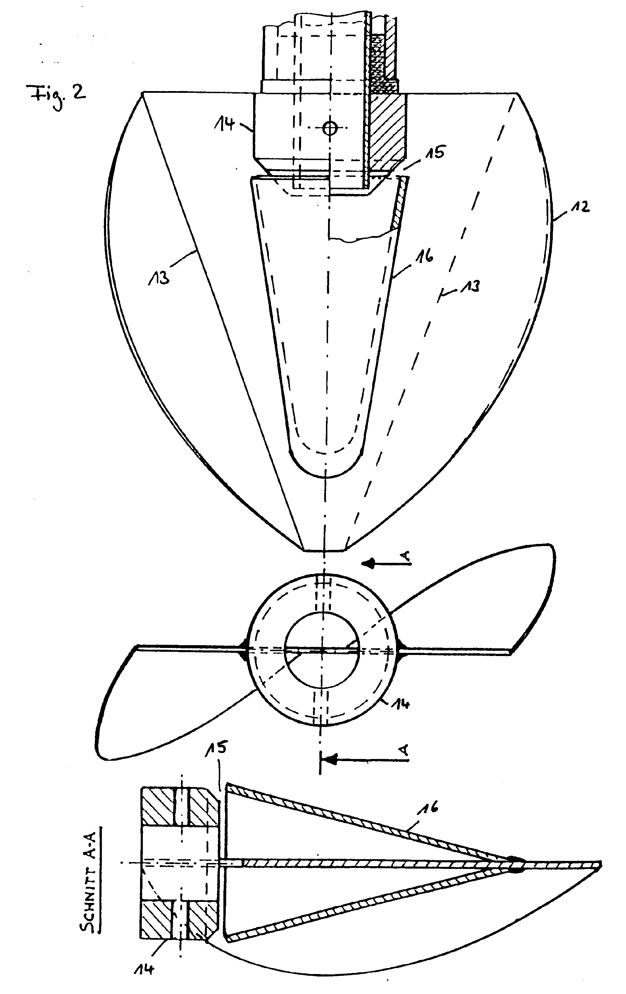

Wie es in Fig. 2 dargestellt ist, besteht der Rührer 9 aus einer Rührschaufel in Form eines runden, hinten abgeflachten Schaufelblattes 12, das längs zweier Kantenlinien 13 spiegelbildlich zur Schaufelblattebene, vorzugsweise unter einem Winkel von 45° in Drehrichtung der Rührschaufel abgewinkelt ist. Die Kantenlinien 13 laufen in Längsrichtung nach vorne unter einem spitzen Winkel von beispielsweise 40° zusammen.

Wie es weiterhin in Fig. 2 dargestellt ist, ist in den abgeflachten Teil des Schaufelblattes 12 eine Büchse 14 eingeschweißt, die sich bis zu Luftschlitzen 15 zum Einführen von Luft in die Gülle oder Jauche erstreckt, die im Schaufelblatt 12 ausbebildet sind, wobei die Büchse 14 an ihrer Vorderseite bis zu den Luftschlitzen 15 durch eine Verkleidung 16 stromlinienförmig verkleidet ist. Die als Hohlwelle ausgebildete Rührschaufelwelle 7 mündet an den Luftschlitzen 15.

Wie es insbesondere in Fig. 3 dargestellt ist, ist vorzugsweise das Strömungsleitrohr 10 am vorderen Ende schräg abgeschnitten, was den Vorteil hat, daß beim Aufsetzen des Strömungsleitrohres 10 auf den Behälterboden ein ausreichender Ansaugquerschnitt zum Ansaugen des behandelten Materials bleibt. In Fig. 3 sind weiterhin die Halteeinrichtungen 17 zum Halten des Strömungsleitrohres 10 am Führungsrohr 6 dargestellt.

Die oben beschriebene Rührvorrichtung arbeitet in der folgenden Weise:
Durch Drehen des Rührers 9 entsteht im Strömungsleitrohr 10 eine Strömung, die bei vertikalem Einsatz der Rührvorrichtung zwangsweise nach oben gerichtet ist, so daß bei genügender Einschaltdauer am Boden des Güllebehälters eine horizontale Strömung aufgebaut wird, wodurch im Laufe der Zeit der größte Teil des Behälterinhalts mehrmals durch das Strömungsleitrohr 10 geschleust wird.

In diese Strömung wird ohne großen Druck Frischluft eingeblasen, welche während des langsamen Emporsteigens Sauerstoff abgibt und nachträglich im entstehenden Oberflächenschaum einige Zeit zurückgehalten wird.

Der Einsatz der Rührvorrichtung beginnt zweckmäßigerweise bei einem Pegelstand von etwa +1,00 m und dauert bis zur Entleerung des Güllebehälters. Bei dem minimalen Energiebedarf der Rührvorrichtung ist das wirtschaftlich zu vertreten.

Es ist durch die erfindungsgemäße Vorrichtung gewährleistet, daß eine beinahe geruchsfreie homogenisierte weitgehend mineralisierte und keimfreie Gülle für Düngungszwecke zur Verfügung steht.

## Patentansprüche

1. Rührvorrichtung zum Durchmischen und Belüften von Gülle oder Jauche mit einem Strömungsleitrohr (10), das koaxial einen drehbaren Rührer umgibt, dadurch gekennzeichnet, daß der Rührer als Rührschaufel (9) in Form eines runden, in axialer Richtung hinten abgeflachten Schaufelblattes (12) ausgebildet ist, das längs zweier Kantenlinien (13) spiegelbildlich zur Schaufelblattebene abgewinkelt ist, die axial von hinten nach vorne unter einem spitzen Winkel zusammenlaufen.

2. Vorrichtung nach Anspruch 1, dadurch gekennzeichnet, daß die abgewinkelten Teile des Schaufelblattes (12) unter einem Winkel von 45° zur Schaufelblattebene abgewinkelt sind.

3. Vorrichtung nach Anspruch 1 oder 2, dadurch gekennzeichnet, daß das Strömungsleitrohr (10) am vorderen Ende schräg abgeschnitten ist.

4. Vorrichtung nach einem der Ansprüche 1 bis 3, dadurch gekennzeichnet, daß zum Belüften der Gülle oder Jauche in den abgeflachten Teil des Schaufelblattes (12) eine Büchse (14) eingeschweißt und die Rührerwelle als Hohlwelle (7) ausgebildet ist, die in der Büchse (14) sitzt.

## Claims

1. Stirring device for stirring and ventilating liquid manure, comprising a flow guidance pipe (10) coaxially encircling a rotateable mixer, characterized in that the mixer is formed as a stirring agitator (9) in the shape of a round blade (12) flattened in axial direction at the rear, which, mirror-invertedly with respect to the plane of the blade, is bent along two edge lines (13) axially running together from the rear to the front in an acute angle.

2. Device according to claim 1, characterized in that the bent parts of the blade (12) form an angle of 45° with respect to the plane of the blade.

3. Device according to claim 1 or 2, characterized in that the flow guidance pipe (10) is cut off slantingly at the front end.

4. Device according to one of the claims 1 to 3, characterized in that, for ventilation of the liquid-manure, a box (14) is soldered into the flattened part of the blade (12), and the mixer shaft is formed as a hollow shaft (7) seated in the box (14).

## Revendications

1. Dispositif d'agitation pour mélanger et aérer du lisier ou du purin, comportant un tube de guidage d'écoulement (10) qui entoure coaxialement un agitateur tournant, caractérisé en ce que l'agitateur est une pale d'agitation (9) sous la forme d'une lame de pale (12) ronde, aplatie à l'arrière dans la direction axiale, qui est coudée dans une symétrie en miroir par rapport au plan de la lame, le long de deux lignes de bord (13), qui se rapprochent axialement, de l'arrière vers l'avant, sous un angle aigu.

2. Dispositif selon la revendication 1, caractérisé en ce que les parties coudées de la lame (12) de la pale sont coudées sous un angle de 45° par rapport au plan de la lame.

3. Dispositif selon la revendication 1 ou 2, caractérisé en ce que le tube de guidage d'écoulement (10) est coupé obliquement à son extrémité avant.

4. Dispositif selon l'une des revendications 1 à 3, caractérisé en ce que pour aérer le lisier ou le purin un fourreau (14) est soudé sur la partie aplatie de la lame (12) de la pale et en ce que l'arbre de l'agitateur est un arbre creux (7) calé dans le fourreau (14).
